# EUROPÄISCHE PATENTANMELDUNG

(11) **EP 4 184 627 A1**
(43) Veröffentlichungstag der Anmeldung: **24.05.2023**
(21) Anmeldenummer: 21208658.1
(22) Anmeldetag: 17.11.2021
(51) Int. Cl.: H01M 10/04

(54) **VERFAHREN ZUM BESTIMMEN VON STEUERBAREN PROZESSPARAMETERN FÜR EINE BATTERIEPRODUKTIONSANLAGE, VERFAHREN ZUM BETREIBEN EINER BATTERIEPRODUKTIONSANLAGE UND BATTERIEPRODUKTIONSANLAGE**

(71) Anmelder: Siemens Aktiengesellschaft, 80333 München (DE)
(72) Erfinder: Baldauf, Manfred, 91056 Erlangen (DE); Bruhn, Cecilia Margareta, 80807 München (DE); Otte, Clemens, 81739 München (DE); Reitinger, Axel, 81377 München (DE); Schricker, Barbara, 91058 Erlangen (DE); Schulte, Sascha, 91315 Höchstadt (DE); Witt, Jonas, 96050 Bamberg (DE)
(74) Vertreter: Siemens Patent Attorneys

(57) **Zusammenfassung**

Die Erfindung betrifft ein Verfahren zum Bestimmen von steuerbaren Prozessparametern für eine Batterieproduktionsanlage, ein Verfahren zum Betreiben einer Batterieproduktionsanlage und eine Batterieproduktionsanlage. Das Verfahren zum Bestimmen von steuerbaren Prozessparametern umfasst mehrere Schritte. Zunächst erfolgt ein Ermitteln von Messwerten von Herstellungsparametern in der Batterieproduktionsanlage mittels Sensoren. Es erfolgt auch ein Ermitteln wenigstens eines Qualitätswerts wenigstens einer in der Batterieproduktionsanlage mit den ermittelten Messwerten hergestellten Batteriezelle, wobei der Qualitätswert den Messwerten zugeordnet wird. Der wenigstens eine Qualitätswert und Messwerte werden an eine Recheneinheit übertragen. Anschließend erfolgt ein Ermitteln einer Abhängigkeit des wenigstens einen Qualitätswerts von den Messwerten in der Recheneinheit. Dann erfolgt ein Ermitteln einer Abhängigkeit des wenigstens einen Qualitätswerts von geänderten Herstellungsparametern, welche sich im Wert von den Messwerten unterscheiden, in der Recheneinheit, wobei ein Maschinen-Lern-Verfahren, insbesondere mit einer bayesianischer Optimierung, in der Recheneinheit durchgeführt wird, wobei insbesondere in die Optimierung als Stützstellen Messwerte mit zugeordneten Qualitätswerten eingehen. Dann erfolgt ein Ermitteln wenigstens eines steuerbaren Prozessparameters aus den geänderten Herstellungsparametern mit verbesserten Qualitätswert, wobei die Ermittlung insbesondere basierend auf der mittels bayesianischer Optimierung ermittelten Abhängigkeit erfolgt.

## Beschreibung

Die Erfindung betrifft ein Verfahren zum Bestimmen von steuerbaren Prozessparametern für eine Batterieproduktionsanlage, ein Verfahren zum Betreiben einer Batterieproduktionsanlage und eine Batterieproduktionsanlage.

Lithium-Ionen-Akkumulatoren, im Folgenden auch Lithium-Ionen-Batterien genannt, werden aufgrund ihrer hohen Leistungsdichte und Energiedichte in mobilen und stationären Anwendungen als Energiespeicher eingesetzt.

Eine Lithium-Ionen-Batterie umfasst typischerweise mehrere Batteriezellen. Eine Batteriezelle, insbesondere eine Lithium-Ionen-Batteriezelle, umfasst eine Vielzahl von Schichten. Typischerweise umfassen diese Schichten Anoden, Kathoden, Separatoren und weitere Elemente. Diese Schichten können als Stapel oder als Wicklungen ausgestaltet sein.

Die Produktion dieser Lithium-Ionen-Batterien umfasst eine Vielzahl von Fertigungsschritten. In jedem einzelnen dieser Prozessschritte gibt es eine Vielzahl von steuerbaren Prozessparametern. Weiterhin gibt es während der Produktion der Lithium-Ionen-Batterien eine große Anzahl von Einflussgrößen auf die Qualität der erzeugten Batteriezellen. Insbesondere können während des Herstellungsprozesses Störungen oder Abweichungen von Normbereichen auftreten.

Im Stand der Technik werden Prozessparameter durch Labortests vordefiniert und während des Betriebs der Batterieproduktionsanlage mittels Pilotlinientests überprüft und angepasst. Sowohl die Labortests als auch das Überprüfen während des Betriebs sind nachteilig zeitaufwendig und nicht für alle Einflussgrößen möglich.

Aufgrund der komplexen Vielzahl von Einflussgrößen auf die Qualität des erzeugten Batteriespeichers, sind die Ausschussraten während der Batterieproduktion hoch.

Dies hat nachteilig einen negativen Einfluss auf die Kapazität der Batterieproduktionsanlage.

Aufgabe der vorliegenden Erfindung ist es daher ein Verfahren für eine Batterieproduktionsanlage und eine Batterieproduktionsanlage anzugeben, welche die Ausschussraten während der Batterieproduktion vermindern.

Die Aufgabe wird erfindungsgemäß mit einem Verfahren zum Bestimmen von steuerbaren Prozessparametern gemäß Anspruch 1, einem Verfahren zum Betreiben einer Batterieproduktionsanlage gemäß Anspruch 13 und einer Batterieproduktionsanlage gemäß Anspruch 15 gelöst.

Das erfindungsgemäße Verfahren zum Bestimmen von steuerbaren Prozessparametern für eine Batterieproduktionsanlage umfasst mehrere Schritte. Zunächst erfolgt das Ermitteln von Messwerten von Herstellungsparametern mittels Sensoren in der Batterieproduktionsanlage. Weiterhin erfolgt das Ermitteln wenigstens eines Qualitätswerts wenigstens einer in der Batterieproduktionsanlage mit den ermittelten Messwerten hergestellten Batteriezelle. Der Qualitätswert wird dabei den Messwerten zugeordnet. Der wenigstens eine Qualitätswert und die diesem zugeordneten Messwerte werden an eine Recheneinheit übertragen. In der Recheneinheit wird anschließend eine Abhängigkeit des wenigstens einen Qualitätswerts von den Messwerten ermittelt. Weiterhin wird in der Recheneinheit eine Abhängigkeit des wenigstens einen Qualitätswerts von geänderten Herstellungsparametern, welche sich von den Messwerten unterscheiden, ermittelt. Die Ermittlung erfolgt basierend auf einer mittels eines Maschinen-Lern-Verfahrens bestimmten Abhängigkeit. In einem nächsten Schritt erfolgt das Ermitteln wenigstens eines steuerbaren Prozessparameters aus den geänderten Herstellungsparametern mit einem verbesserten Qualitätswert. Das Ermitteln wenigstens eines steuerbaren Prozessparameters erfolgt basierend auf einer Parameteroptimierung für das Maschinen-Lern-Verfahren.

In dem erfindungsgemäßen Verfahren zum Betreiben einer Batterieproduktionsanlage, wird die Batterieproduktionsanlage mit dem ermittelten geänderten Prozessparameter betrieben und Batteriezellen mit diesen geänderten Prozessparametern erzeugt.

Die erfindungsgemäße Batterieproduktionsanlage umfasst eine Recheneinheit, wobei die Recheneinheit ausgestaltet ist, das Verfahren zum Bestimmen von steuerbaren Prozessparametern für die Batterieproduktionsanlage durchzuführen.

Vorteilhaft ist es mit dem erfindungsgemäßen Verfahren möglich, komplexe Zusammenhänge von Herstellungsparametern mit einem Qualitätswert zu bestimmen und anschließend steuerbare Prozessparameter zu identifizieren. Mittels der Batterieherstellung mit diesen Prozessparametern können vorteilhaft Batteriezellen hergestellt werden, welche eine Mindestanforderung an den Qualitätswert erfüllen. In anderen Worten ist somit das Einstellen der Batterieproduktionsanlage automatisiert möglich. Vorteilhafterweise beschleunigt das erfindungsgemäße Verfahren das Einstellen der Herstellungsparameter einer Batterieproduktionsanlage, insbesondere im Sinne eines Design-of-Experiments. Vorteilhaft werden also weniger Optimierungsschritte zum Auffinden einer optimalen Einstellung der Herstellungsparameter der Batterieproduktionsanlage benötigt. Dies ermöglicht ein zeitlich schnelleres Optimieren der Batterieproduktionsanlage, sodass der Ausschuss der Batterieproduktionsanlage verringert wird.

Weiterhin ist es vorteilhaft möglich, mit dem erfindungsgemäßen Verfahren komplexe Ursachen-Wirkungsbeziehungen zu erfassen, welche durch eine händische Auswertung durch Fachpersonal nicht erfasst werden können. Weiterhin können die Optimierungsergebnisse vorteilhaft über mehrere Produktionslinien einer Batterieproduktionsanlage hinweg eingesetzt werden.

Vorteilhaft erfolgt das erfindungsgemäße Verfahren computergestützt.

In einer vorteilhaften Ausgestaltung und Weiterbildung der Erfindung erfolgt die Parameteroptimierung für das Maschinen-Lern-Verfahren mit einer bayesianischen Optimierung. In der Optimierung werden als Stützstellen Messwerte mit den zugeordneten Qualitätswerten herangezogen. Die Bayesianische Optimierung nutzt das Maschinen-Lern-Verfahren in einem iterativen Prozess, um sich einem optimalen Herstellungsparameter anzunähern. Es werden insbesondere sukzessiv Vorschläge für Herstellungsparameter erzeugt und in dem durch das Maschinen-Lern-Verfahren erzeugten Modell getestet. Vorteilhaft verkürzt der Einsatz des bayesianischen Optimierung die Rechenzeit zum Auffinden optimaler Herstellungsparameter.

In einer vorteilhaften Ausgestaltung und Weiterbildung der Erfindung kann basierend auf neuen Herstellungsparametern wiederum mittels des Maschinen-Lern-Verfahrens ein verbessertes Modell erzeugt werden.

In einer vorteilhaften Ausgestaltung und Weiterbildung der Erfindung werden als Herstellungsparameter Prozessparameter, stochastische Herstellungsparameter und Störgrößen verwendet.

Als Prozessparameter werden die Parameter bezeichnet, welche steuerbar einstellbar sind. Dies sind insbesondere Rührgeschwindigkeiten einer Rohlösung für eine Elektrodenschicht sein, Temperaturen, Eigenschaften der Rohlösung, insbesondere eine Viskosität der Rohlösung, Vorschubgeschwindigkeiten und/oder ein Massenfluss der Rohlösung während der Beschichtungsprozesse für die Elektrodenschicht, ein Anpressdruck und oder ein Spaltmaß des Beschichtungssystems, eine Elektrolytmenge für die Batteriezelle und/oder der Elektrodenschicht, Konzentrationen der Komponenten der Rohlösung, Trocknungsprofile, Lagerzeiten der eingesetzten Komponenten, Bahnspannungen der Elektrodenschichtbahn und Schweißtemperaturen.

Weiterhin werden als Herstellungsparameter auch stochastische Herstellungsparameter verstanden. Als stochastische Herstellungsparameter werden insbesondere Erschütterungen, Luftströmungen in der Produktionsanlage, ein Chargenwechsel von Rohmaterialien, eine Staubkonzentration in der Batterieproduktionsanlage, eine Luftströmung in der Batterieproduktionsanlage, Fachpersonalverhalten, eine Sonneneinstrahlung, ein Umgebungsluftdruck verstanden.

Weiterhin werden als Herstellungsparameter auch Störgrößen verstanden. Als Störgrößen werden insbesondere Abweichungen der Prozessparameter von Sollwerten, Änderungen der Luftfeuchtigkeit, Erschütterungen, Inhomogenitäten in der Paste, Unterbrechungen, insbesondere Stromausfall, kurzzeitige Spannungsvariationen, Chargenwechsel, eine Staubkonzentration, Verstopfungen an Düsen und/oder Schlitzen und mechanische Abnutzung an den Maschinen verstanden.

Vorteilhaft werden somit eine Vielzahl von Herstellungsparametern erfasst. Weiterhin werden eine Vielzahl von Herstellungsparametern mit einem Qualitätswert korreliert. Weiterhin werden vorteilhafterweise die Herstellungsparameter herangezogen, um steuerbare Prozessparameter zu identifizieren, welche den Qualitätswert weiter verbessern können. Vorteilhafterweise ist es somit möglich, die komplexen Zusammenhänge während der Batterieproduktion mit dem Qualitätswert der erzeugten Batterien zu korrelieren, und somit steuerbare Prozessparameter zu identifizieren, welche den Qualitätswert verbessern.

Einerseits ist es vorteilhaft, dass Verfahrens beim Anfahren der Batterieproduktionsanlage einzusetzen, um in möglichst kurzer Zeit eine hohe Qualität der erzeugten Batterien zu erreichen. Alternativ kann der steuerbare Prozessparameter ermittelt werden, nachdem eine Störgröße die Batterieproduktion nachteilig verändert hat. In diesem Fall würde ein steuerbarer Prozessparameter ermittelt werden, der als Gegenmaßnahme für einen Fehler in der Produktionskette der Batterieproduktion eingestellt wird.

In einer weiteren vorteilhaften Ausgestaltung und Weiterbildung der Erfindung wird als Qualitätswert eine Selbstentladerate, ein Innenwiderstand, eine Kapazität, eine Leerlaufspannung, ein Deformierungswert, ein Innenwiderstand oder ein Gewicht der Batteriezelle verwendet. Diese Qualitätswerte werden End-of-Line, also am Ende der Batterieproduktion ermittelt. Als Selbstentladerate wird die Fähigkeit einer Batteriezelle verstanden, ihre gespeicherte Energie im Leerlauf ohne Last aufrechtzuerhalten. Das Messen der Selbstentladerate erlaubt somit eine näherungsweise Aussage darüber, wie gut die Batteriezelle in einem Realbetrieb funktioniert. Weiterhin ist die Selbstentladerate ein Maß dafür, wie hoch die Wahrscheinlichkeit ist, dass die Zelle im Lauf ihres Lebens einen Kurzschluss erleidet. Somit ist es vorteilhaft möglich, eine Aussage über die Sicherheit der produzierten Batteriezelle zu treffen.

In einer weiteren vorteilhaften Ausgestaltung und Weiterbildung der Erfindung wird der wenigsten eine Qualitätswert mittels der Messung einer Leerlaufspannung, einer Deformierung der Batteriezelle, einem Innenwiderstand, einer Coulomb-Effizienz, einer Zellkapazität einem Gewicht der Batteriezelle bestimmt. Weiterhin ist es vorteilhaft, den Qualitätswert mittels einer Hoch-Präzisions-Coulometrie, einer elektrochemischen Impedanzspektroskopie, zu bestimmen. Vorteilhafterweise eignen sich diese Messverfahren, um Qualitätswerte zu bestimmen und darauf basierend zu bestimmen, ob der Batteriespeicher eine angeforderte elektrischen Leistung speichern und abgeben kann.

In einer weiteren vorteilhaften Ausgestaltung und Weiterbildung der Erfindung wird als Qualitätswert eine Schichtdicke, eine Oberflächenbeschaffenheit, eine Flächenbeladung, eine Porosität und/oder eine Restfeuchtigkeit der Elektrodenschicht verwendet. Diese Qualitätswerte werden während der Produktion der Batteriezelle ermittelt. Die Messung des wenigstens einen Qualitätswerts erfolgt während der Herstellung der Batteriezelle insbesondere mittels Dilatometrie, eines Röntgenverfahrens und/oder mittels eines Infrarotverfahrens.

In einer weiteren vorteilhaften Ausgestaltung und Weiterbildung der Erfindung bilden der wenigstens eine Qualitätswert und die Messwerte einen gemessenen Datenraum, welcher graphisch ausgegeben wird. Vorteilhaft werden auch die geänderten Herstellungsparameter und/oder geänderte steuerbare Prozessparameter in dem gemessenen Datenraum dargestellt. Besonders bevorzugt erfolgt die Darstellung in einem zweidimensionalen Diagramm. Vorteilhaft ermöglicht dies einem Nutzer ein Überprüfen der vorgeschlagene steuerbaren Prozessparameter. Vorteilhaft ist es auch möglich, dass ein Nutzer manuell weitere steuerbare Prozessparameter vorschlägt.

In einer weiteren vorteilhaften Ausgestaltung und Weiterbildung der Erfindung wird die Produktionsanlage mit dem steuerbaren Prozessparameter betrieben. Es werden wiederum Messwerte zum Bestimmen neuer geänderter Prozessparameter aufgenommen, um eine weitere Optimierung der Batterieproduktionsanlage vorteilhaft zu erreichen.

Weitere Merkmale, Eigenschaften und Vorteile der vorliegenden Erfindung ergeben sich aus der nachfolgenden Beschreibung unter Bezugnahme auf die beiliegenden Figuren. Darin zeigen schematisch:
Figur 1 eine Batterieproduktionsanlage mit Sensoren und einer Recheneinheit;
Figur 2 eine Zielfunktion und ein Model basierend auf einer bayesianischen Optimierung;
Figur 3 einen Parameterraum mit gemessenen und ermittelten steuerbaren Prozessparameterpaaren;
Figur 4 ein Verfahrensschema zum Bestimmen von steuerbaren Prozessparametern für eine Batterieproduktionsanlage.

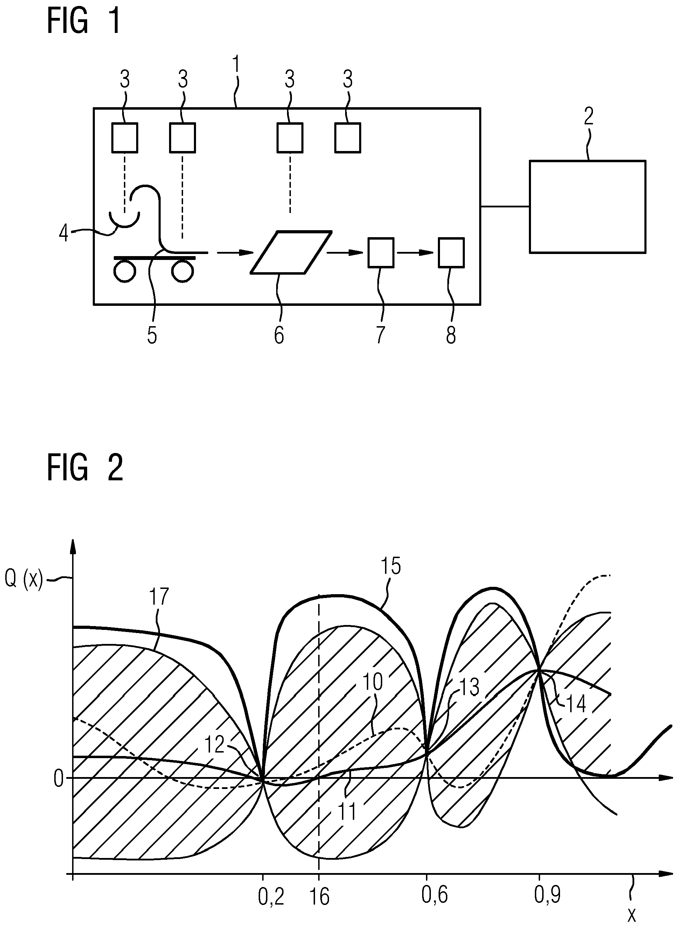

Figur 1 zeigt eine Batterieproduktionsanlage 1, welche verbunden ist mit einer Recheneinheit 2. Die Batterieproduktionsanlage 1 umfasst wenigstens eine Vorrichtung mit einer Rohlösung 4 für eine Elektrodenschicht 5. Sie umfasst auch eine Beschichtungsanlage zum Herstellen der Elektrodenschicht 5. Sie umfasst ebenfalls eine Wickeleinheit 6 zum Wickeln der Elektroden zum Herstellen eines Lithium-basierten Energiespeichers. Die Batterieproduktionsanlage 1 umfasst auch eine Formierungseinheit 7 zum initialen Laden und Entladen der Batteriezelle. Sie umfasst auch eine End-of-Line Testeinheit 8 zum Bestimmen von Qualitätswerten der Batteriezelle. Die Batterieproduktionsanlage 1 umfasst auch Sensoren 3. Diese Sensoren 3 messen Herstellungsparameter, wie insbesondere Eigenschaften der Rohlösung (z.B. Viskosität, Temperatur), der Elektrodenschicht (Schichtdicke, Rauheit) und der Wicklungsanlage (Temperatur, Wickelgeschwindigkeit). Des Weiteren messen Sensoren die Temperatur, den Staubgehalt, die Luftströmung und die Luftfeuchtigkeit im Raum der Batterieproduktionslage. Als Sensoren werden insbesondere auch optische (bildgebende) Sensoren und Hyperspektralkameras eingesetzt. Die genannten Herstellungsanlagen und Sensoren sind hier nicht abschließend genannt. Es werden insbesondere Sensoren jedem Herstellungsschritt zugeordnet.

Die Sensoren erzeugen Daten, welche als Messwerte an die Recheneinheit 1 übertragen werden.

Weiterhin wird ein Qualitätswert einer in der Batterieproduktionsanlage erzeugten Batterie bestimmt. Der Qualitätswert bezeichnet insbesondere eine Selbstentladerate, einen Innenwiderstand, eine Kapazität, eine Leerlaufspannung, einen Deformierungswert, einen Innenwiderstand oder ein Gewicht einer Batteriezelle. Der Qualitätswert kann insbesondere mittels eines Hoch-Präzisions-Coulometrie-Verfahrens zum Messen einer Kapazität ermittelt werden. Der Qualitätswert für eine Elektrodenschicht kann mittels eines Infrarotverfahrens zur Bestimmung der Restfeuchte der Aktivmaterialbeschichtung oder einer Sichtprüfung ermittelt werden.

Der wenigstens eine Qualitätswert und die Messwerte werden an die Recheneinheit übertragen. In einem nächsten Schritt erfolgt das Ermitteln einer Abhängigkeit des wenigstens einen Qualitätswerts von den Messwerten in der Recheneinheit. In anderen Worten heißt das, dass der gemessenen Qualitätswert und die Messwerte zueinander korreliert werden. In einem nächsten Schritt erfolgt das Ermitteln einer Abhängigkeit des wenigstens einen Qualitätswerts von geänderten Herstellungsparametern, welche sich im Wert von den Messwerten unterscheiden. Diese Abhängigkeit wird mittels eines Maschinen-Lern-Verfahrens mit einer bayesianischen Optimierung in der Recheneinheit 2 ermittelt. Dabei dienen die Messwerte mit den zugeordneten gemessenen Qualitätswerten als Stützstellen. In anderen Worten werden nicht nur Zusammenhänge der gemessenen Werte ermittelt, sondern es wird auch für nicht gemessene Herstellungsparameter ermittelt, wie der Qualitätswert dort voraussichtlich ist. Darauf basierend lässt sich wenigstens ein steuerbarer Prozessparameter ermitteln, welcher einer Mindestanforderung an den Qualitätswert erfüllt. Vorteilhaft kann mit dem Verfahren somit vorgeschlagen werden, wie wenigstens ein steuerbarer Prozessparameter verändert werden kann, um den Qualitätswert entweder zu erhöhen oder, im Falle eines Störfaktors während der Batterieherstellung, die Qualität der produzierten Batteriespeicher kontinuierlich zu gewährleisten.

Figur 2 zeigt beispielhaft wie mittels der bayesianischen Optimierung basierend auf einer ersten Stützstelle 12, einer zweiten Stützstellen 13 und einer dritten Stützstellen 14 ein Herstellungsparameter x und eine Abhängigkeit, in diesem Beispiel eines Qualitätswertes von dem Herstellungsparameter x Q(x) ermittelt wird. Auf den bekannten Datenpunkten (12, 13, 14) wird mittels Maschinen-Lern-Verfahrens ein Modell trainiert, das die unbekannte Zielfunktion 10 schätzt. Die Zielfunktion repräsentiert hierbei die Abhängigkeit des Qualitätswertes von den Herstellungsparametern. Das Modell kann insbesondere ein Neuronales Netz, ein Gauss-Prozess, eine Support-Vektor Machine, oder ein Random-Forrest sein. Vorhandenes Domänenwissen lässt sich insbesondere in Form von sogenannten Physics-informed Neural Networks (PINNs) einbeziehen. Die Unsicherheit, die das Modell aufgrund der begrenzten Datenmenge besitzt, wird ebenfalls geschätzt.

Das Modell einschließlich der geschätzten Unsicherheit wird benutzt, um einen Parameterwert 16 vorzuschlagen, an dem die unbekannte Zielfunktion ausgewertet wird. Die Auswertung kann insbesondere als Experiment auf der realen Anlage Batterieproduktionsanlage 1 oder mittels einer Simulation erfolgen. Der hierbei ermittelte Qualitätswert für den neuen Parameterwert 16 wird dem Datensatz hinzugefügt und das Modell auf der erweiterten Datenmenge neu trainiert bzw. aktualisiert. Dies wird sukzessive fortgeführt, bis das Optimum der unbekannten Zielfunktion hinreichend genau gefunden ist. Das Gesamtziel ist also, das unbekannte Optimum mit möglichst wenig Iterationen möglichst genau zu erreichen.

Basierend auf dem Zusammenhang des Qualitätswerts von Herstellungsparametern für nicht gemessene Hersteller Parameterwerte werden Parameterpaare ermittelt, welche einen hohen Qualitätswert der Batteriespeicher für die Batterieproduktionsanlage 1 ermöglichen.

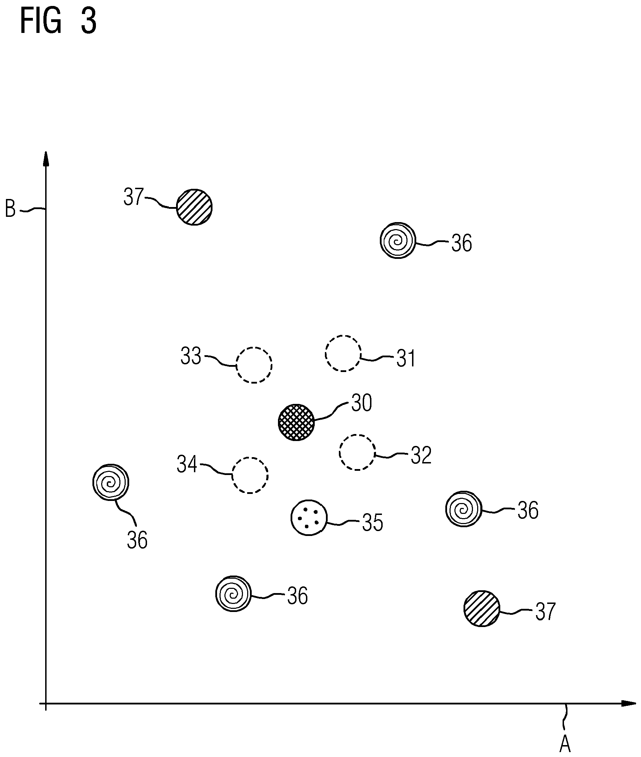

Figur 3 zeigt einen Parameterraum gemessener und ermittelter steuerbarer Herstellungsparameterpaare. In der Figur 3 ist auf der x-Achse der Herstellungsparameter A und auf der y-Achse der Herstellungsparameter B aufgezeigt. In diesem Beispiel bezeichnet A die Schichtdicke der Elektrodenschicht für eine Anode oder Kathode, B beschreibt die Zusammensetzung der Rohlösung oder Paste für die Elektrodenschicht. Als weitere Beispiele können auch die Viskosität der Rohlösung als A und die Porosität der Elektrodenschicht als B aufgetragen werden. Weiterhin können insbesondere auch der Anpressdruck während der Elektrodenschichtherstellung und die Porosität der Elektrodenschicht oder die Trocknungstemperatur während der Herstellung der Elektrodenschicht und der Restfeuchtegehalt in diesem Diagramm dargestellt werden. Es sind gemessene Herstellungsparameterpaare zu erkennen, welche eine erste Qualitätsklasse 30 eine zweite Qualitätsklasse 35, eine dritte Qualitätsklasse 36 und eine vierte Qualitätsklasse 37 aufweisen. Die erste Qualitätsklasse weist dabei die höchste Qualität auf, die vierte Qualitätsklasse 37 die niedrigste.

Basierend auf dem Maschinen-Lern-Verfahren wird eine erstes steuerbares Prozessparameterpaar 31, ein zweites steuerbares Prozessparameterpaar 32, ein drittes steuerbares Prozessparameterpaar 33 und ein viertes steuerbares Prozessparameterpaar 34 ermittelt. Es ist nun möglich in der Batterieproduktionsanlage ein gewähltes steuerbares Prozessparameterpaar einzustellen und wiederum Messwerte und den Qualitätswert zu messen, an die Recheneinheit zu übertragen, wiederum Abhängigkeiten festzustellen, welche mit einem Maschinen-Lern-Verfahren ausgewertet werden, wiederum neue Herstellungsparameter und darauf basierend steuerbare Prozessparameter zu ermitteln, welche in einem nächsten Schritt verwendet werden können. In anderen Worten ermöglicht das Verfahren somit, ein Design auf Experiment zu realisieren, mit welchem eine Verbesserung der Qualitätswerte der Batteriespeicher in der Herstellung und somit auch eine Verringerung des Ausschusses der erzeugten Batteriespeicher ermöglicht wird.

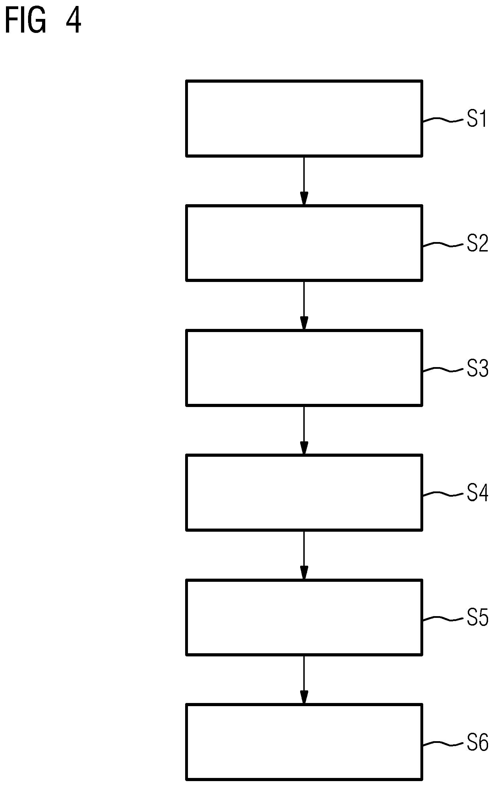

Figur 4 zeigt ein Verfahrensschema zum Ermitteln von steuerbaren Prozessparametern für eine Batterieproduktionsanlage. In einem ersten Schritt S1 erfolgt das Ermitteln von Messwerten von Herstellungsparametern in der Batterieproduktionsanlage. In einem zweiten Schritt S2 erfolgt das Ermitteln wenigstens eines Qualitätswerts wenigstens einer in der Batterieproduktionsanlage mit den ermittelten Messwerten hergestellten Batteriezelle. Der Qualitätswert wird dabei einem Messwert zugeordnet. In einem dritten Schritt S3 erfolgt das Übertragen des wenigstens einen Qualitätswerts und der Messwerte an eine Recheneinheit. In einem vierten Schritt S4 erfolgt das Ermitteln einer Abhängigkeit des wenigstens einen Qualitätswerts von den Messwerten in der Recheneinheit. In einem fünften Schritt S5 erfolgt das Ermitteln einer Abhängigkeit des wenigstens einen Qualitätswerts von geänderten Herstellungsparametern, welche sich im Wert von den Messwerten unterscheiden, in der Recheneinheit. Dabei wird ein Maschinen-Lern-Verfahren mit einer bayesianischen Optimierung in der Recheneinheit durchgeführt. Die Optimierung basiert dabei auf Stützstellen, welche die Messwerte mit den zugeordneten Qualitätswerten darstellen. In einem sechsten Schritt erfolgt das Ermitteln wenigstens eines steuerbaren Prozessparameters aus den geänderten Herstellungsparametern mit einem geänderten Qualitätswert, welcher einer Mindestanforderung an den Qualitätswert erfüllt, wobei die Ermittlung basierend auf der mittels bayesianischer Optimierung ermittelten Abhängigkeit erfolgt.

Obwohl die Erfindung im Detail durch das bevorzugte Ausführungsbeispiel näher illustriert und beschrieben wurde, ist die Erfindung nicht durch die offenbarten Beispiele eingeschränkt. Variationen hiervon können vom Fachmann abgeleitet werden, ohne den Schutzumfang der Erfindung, wie er durch die nachfolgenden Patentansprüche definiert wird, zu verlassen.

### Bezugszeichenliste

- 1: Batterieproduktionsanlage
- 2: Recheneinheit
- 3: Sensor
- 4: Rohlösung
- 5: Elektrodenschicht
- 6: Wickeleinheit
- 7: Formierungseinheit
- 8: End-of-Line Testeinheit
- 10: Zielfunktion
- 11: Model
- 12: erste Stützstelle
- 13: zweite Stützstelle
- 14: dritte Stützstelle
- 15: Wahrscheinliche Verbesserung
- 16: erste Optimierungsstelle
- 30: Qualitätsklasse 1
- 31: erstes steuerbares Prozessparameterpaar
- 32: zweites steuerbares Prozessparameterpaar
- 33: drittes steuerbares Prozessparameterpaar
- 34: viertes steuerbares Prozessparameterpaar
- 35: Qualitätsklasse 2
- 36: Qualitätsklasse 3
- 37: Qualitätsklasse 4
- A: Herstellungsparameter A
- B: Herstellungsparameter B
- X: Herstellungsparameter x
- Q(x): Qualitätswert in Abhängigkeit von x

- S1: Ermitteln von Messwerten von Herstellungsparametern in der Batterieproduktionsanlage
- S2: Ermitteln wenigstens eines Qualitätswerts wenigstens einer in der Batterieproduktionsanlage mit den ermittelten Messwerten hergestellten Batteriezelle, wobei der Qualitätswert den Messwerten zugeordnet wird
- S3: Übertragen des wenigstens einen Qualitätswerts und der Messwerte an eine Recheneinheit
- S4: Ermitteln einer Abhängigkeit des wenigstens einen Qualitätswerts von den Messwerten in der Recheneinheit
- S5: Ermitteln einer Abhängigkeit des wenigstens einen Qualitätswerts von geänderten Herstellungsparametern, welche sich im Wert von den Messwerten unterscheiden, in der Recheneinheit, wobei ein Maschinen-Lern-Verfahren mit einer bayesianischer Optimierung in der Recheneinheit durchgeführt wird, wobei in die Optimierung als Stützstellen Messwerte mit zugeordneten Qualitätswerten eingehen
- S6: Ermitteln wenigstens eines steuerbaren Prozessparameters aus den geänderten Herstellungsparametern mit einem geänderten Qualitätswert, welcher einer Mindestanforderung an den Qualitätswert erfüllt, wobei die Ermittlung basierend auf der mittels bayesianischer Optimierung ermittelten Abhängigkeit erfolgt.

## Patentansprüche

1. Verfahren zum Bestimmen von steuerbaren Prozessparametern (x) für eine Batterieproduktionsanlage (1) mit folgenden Schritten:
- Ermitteln von Messwerten von Herstellungsparametern (A, B) in der Batterieproduktionsanlage (1) mittels Sensoren (3),
- Ermitteln wenigstens eines Qualitätswerts wenigstens einer in der Batterieproduktionsanlage (1) mit den ermittelten Messwerten hergestellten Batteriezelle, wobei der Qualitätswert den Messwerten zugeordnet wird,
- Übertragen des wenigstens einen Qualitätswerts und der Messwerte an eine Recheneinheit (2),
- Ermitteln einer Abhängigkeit des wenigstens einen Qualitätswerts von den Messwerten in der Recheneinheit (2),
- Ermitteln einer Abhängigkeit des wenigstens einen Qualitätswerts von geänderten Herstellungsparametern, welche sich im Wert von den Messwerten unterscheiden, in der Recheneinheit, wobei ein Maschinen-Lern-Verfahren in der Recheneinheit (2) durchgeführt wird,
- Ermitteln wenigstens eines steuerbaren Prozessparameters aus den geänderten Herstellungsparametern mit einem verbesserten Qualitätswert, wobei die Ermittlung basierend auf einer Parameteroptimierung für das Maschinen-Lern-Verfahren erfolgt.

2. Verfahren nach Anspruch 1, wobei als Parameteroptimierung eine bayesianische Optimierung für die ermittelte Abhängigkeit verwendet wird, wobei in die Optimierung als Stützstellen (12, 13, 14) Messwerte mit zugeordneten Qualitätswerten eingehen.

3. Verfahren nach Anspruch 1 oder 2, wobei als Herstellungsparameter Prozessparameter, stochastische Herstellungsparameter und Störgrößen verwendet werden.

4. Verfahren nach einem der vorhergehenden Ansprüche, wobei als Herstellungsparameter Materialeigenschaften, Temperaturen, Luftfeuchtigkeit, Staubkonzentration, Luftströmung, Lieferinformationen und/oder Chargeninformationen verwendet werden.

5. Verfahren nach einem der vorhergehenden Ansprüche, wobei als Störgrößen Fremdpartikeleinschlüsse, Temperaturabweichungen, Luftfeuchteabweichungen, Erschütterungen, eine Rohlösungs-Inhomogenität gemessen werden.

6. Verfahren nach einem der vorhergehenden Ansprüche, wobei als Prozessparameter die Temperatur, Rührgeschwindigkeiten einer Rohlösung für eine Elektrodenschicht, Eigenschaften der Rohlösung, Vorschubgeschwindigkeiten und/oder ein Massenfluss der Rohlösung während der Beschichtungsprozesse für die Elektrodenschicht, ein Anpressdruck und oder ein Spaltmaß eines Beschichtungssystems zum Herstellen der Elektrodenschicht und/oder eine Konzentrationen der Komponenten einer Rohlösung für eine Elektrodenschicht verwendet werden.

7. Verfahren nach einem der vorhergehenden Ansprüche, wobei als der Qualitätswert eine Selbstentladerate, ein Innenwiderstand, eine Kapazität, eine Leerlaufspannung, ein Deformierungswert, ein Innenwiderstand, ein Gewicht der Batteriezelle, eine Schichtdicke, eine Oberflächenbeschaffenheit, eine Flächenbeladung, eine Porosität und/oder eine Restfeuchtigkeit der Elektrodenschicht verwendet wird.

8. Verfahren nach einem der vorhergehenden Ansprüche, wobei der Qualitätswert mittels der Messung einer Leerlaufspannung, einer Deformierung der Batteriezelle, einem Innenwiderstand, einer Zellkapazität und/oder einem Gewicht der Batteriezelle bestimmt wird.

9. Verfahren nach einem der vorhergehenden Ansprüche, wobei zum Bestimmen des Qualitätswerts eine Hoch-Präzisions-Coulometrie und/oder ein Infrarotverfahren durchgeführt wird.

10. Verfahren nach einem der vorhergehenden Ansprüche, wobei der wenigstens eine Qualitätswert und die Messwerte einen gemessenen Datenraum bilden, welcher graphisch ausgegeben wird.

11. Verfahren nach einem der vorhergehenden Ansprüche, wobei die geänderten Herstellungsparameter und/oder geänderten Prozessparameter in dem gemessenen Datenraum einem Nutzer graphisch überlappend dargestellt wird.

12. Verfahren nach eine der Ansprüche 10 oder 11, wobei der Datenraum als zweidimensionales Diagramm dargestellt wird.

13. Verfahren zum Betreiben einer Batterieproduktionsanlage (1), wobei ein nach einem der Ansprüche 1 bis 12 ermittelter geänderter Prozessparameter eingestellt wird und Batteriezellen mit diesen geänderten Prozessparametern erzeugt werden.

14. Verfahren nach Anspruch 13, wobei das Verfahren nach einem der Ansprüche 1 bis 12 während der Herstellung von Batteriezellen mit den geänderten Prozessparametern durchgeführt wird.

15. Batterieproduktionsanlage (1) mit einer Recheneinheit (2), wobei die Recheneinheit (2) ausgestaltet ist, ein Verfahren nach einem der Ansprüche 1 bis 11 durchzuführen.
